# DEMANDE DE BREVET EUROPEEN

(11) **EP 2 782 265 A1**
(43) Date de publication de la demande: **24.09.2014**
(21) Numéro de dépôt: 13305328.0
(22) Date de dépôt: 19.03.2013
(51) Int. Cl.: H04B 7/155

(54) **Contrôle de la répétition dans une installation domotique**

(71) Demandeur: HAGER CONTROLS (Société par Actions Simplifiée), 67700 Saverne (FR)
(72) Inventeur: Van Landeghem, Nicolas, 67000 Strasbourg (FR)
(74) Mandataire: Nuss, Laurent

(57) **Abrégé**

La présente invention a pour objet un procédé de contrôle (100) d'une borne de répétition sans fil, procédé comprenant une étape de réception première (101), au cours de laquelle la borne de répétition reçoit un premier signal, à destination d'une borne destinataire et provenant d'une borne source, ainsi qu'une étape de répétition première (102), au cours de laquelle la borne de répétition répète ce premier signal.

Ce procédé est caractérisé en ce que la répétition première (102) n'est pas réalisée si la borne de répétition n'est pas capable de communiquer avec la borne destinataire.

L'invention a aussi pour objet un procédé de communication comprenant un tel procédé de contrôle, un dispositif de communication apte à former la borne de répétition ou la borne source.

## Description

La présente invention relève du domaine des installations domotiques qui communiquent sans fils, et a pour objet, d'une part, un procédé de contrôle d'une borne de répétition, un procédé de communication l'utilisant, ainsi que des moyens de mise en oeuvre.

Une installation domotique contient des appareils qui communiquent sans fil, sous la forme de bornes disposant de moyens d'émission de signal sans fil et/ou de moyens de réception de signal sans fil. L'installation peut bien sûr aussi comprendre des équipements qui communiquent de façon filaire, certains équipements pouvant assurer les deux modes de communication.

L'installation présente donc un réseau de bornes qui communiquent sans fils, et qui peuvent alors remplir une fonction d'émission et/ou une fonction de réception. De façon générale chaque équipement apte à assurer une fonction de réception est aussi apte à assurer une fonction d'émission, et il est alors configuré pour répéter les différents signaux qu'il reçoit, et qui sont parfois à destination d'autres bornes. Ces signaux peuvent être des instructions, des informations, etc.

Le nombre de signaux sans fil ainsi émis, et surtout répétés, peut être très important, et amener à des perturbations ou du bruit. En outre, la répétition systématique, par un répéteur, des signaux reçus peut aussi se faire au détriment de certains autres signaux que ledit répéteur est le seul à pouvoir acheminer correctement. Cela gêne l'échange de signaux et/ou dénature la qualité du signal.

La présente invention a pour but de pallier au moins une partie et préférentiellement tous ces inconvénients et propose ainsi essentiellement de ne pas procéder à la répétition si le répéteur ne peut pas servir pour communiquer avec la borne à laquelle le message est destiné.

A cet effet, l'invention a pour objet un procédé de contrôle d'une borne de répétition sans fil, ladite borne étant apte à recevoir et envoyer des signaux sans fil, destinée à former l'une des bornes d'une installation domotique comprenant un ensemble de bornes qui communiquent sans fil, dont au moins une borne source, apte à émettre un signal sans fil, au moins une borne destinataire, apte à recevoir un signal sans fil, procédé comprenant une étape de

réception première, au cours de laquelle la borne de répétition reçoit un premier signal, à destination de la borne destinataire différente d'elle et provenant de la borne source, ledit premier signal ayant été étant émis directement par la borne source ou répété par une autre borne de l'installation domotique, ainsi qu'une étape de
répétition première, au cours de laquelle la borne de répétition répète ce premier signal.

Ce procédé est **caractérisé en ce que**
la répétition première n'est pas réalisée si la borne de répétition n'est pas capable de communiquer avec la borne destinataire.

L'invention a aussi pour objet un procédé de communication dans une installation domotique comprenant un ensemble de bornes qui communiquent sans fil, dont au moins une borne source, apte à émettre un signal sans fil, au moins une borne destinataire, apte à recevoir un signal sans fil, ainsi qu'au moins une borne de répétition sans fil, ladite borne étant apte à recevoir et envoyer des signaux sans fil, ledit procédé
comprenant une étape d'émission première sans fil, par une ou la borne source, d'un premier signal, à destination de la ou d'une borne destinataire, et comprenant, en outre,
une étape de génération d'un acquittement, mise en oeuvre par la borne destinataire consistant essentiellement à générer un signal d'acquittement à destination de la borne source et confirmant que la borne destinataire a bien reçu le premier signal,
la ou une borne de répétition mettant en oeuvre le procédé de contrôle décrit ci-dessus.

L'invention a aussi pour objet un dispositif de communication apte à former une borne de répétition pour la mise en oeuvre du procédé de contrôle ou du procédé de communication, ainsi qu'une borne source pour la mise en oeuvre du procédé de communication.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- les figures 1 à 3 illustrent les échanges et répétitions d'information entre les bornes dans une certaine configuration d'installation domotique ;
- les figures 4 à 6 illustrent les étapes du procédé, et
- les figures 7 et 8 illustrent chacune un chronogramme des échanges de signal.

L'invention a donc tout d'abord pour objet un procédé de contrôle 100 d'une borne de répétition 1 sans fil, ladite borne étant apte à recevoir et envoyer des signaux sans fil, destinée à former l'une des bornes d'une installation domotique 4 comprenant un ensemble de bornes qui communiquent sans fil, dont au moins une borne source 2, apte à émettre un signal sans fil, au moins une borne destinataire 3, apte à recevoir un signal sans fil.

Le procédé de contrôle 100 vise à être mis en oeuvre par une borne de répétition 1, qui est au moins apte à recevoir un signal sans fil et à émettre un signal sans fil. Comme il sera décrit plus loin, ce procédé de contrôle 100 permet en particulier d'optimiser la répétition des signaux perçus par la borne de répétition 1.

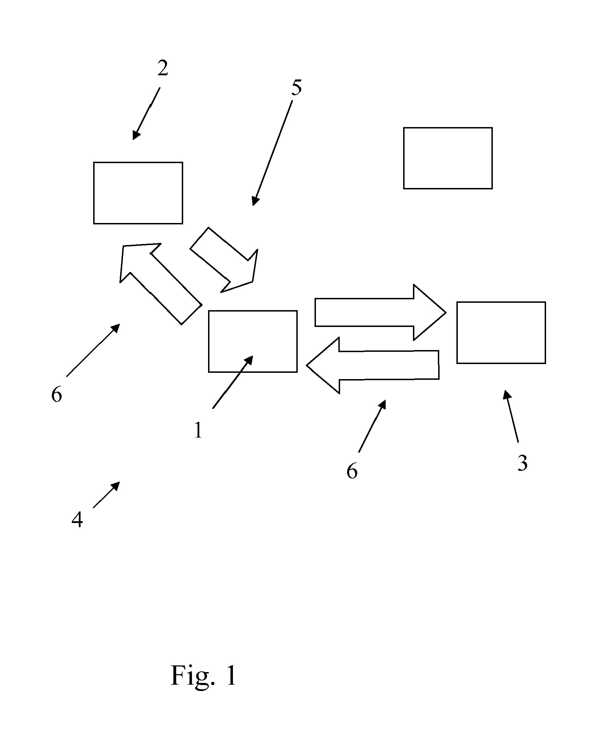

L'installation domotique 4 comprend une pluralité de bornes qui communiquent sans fil, comme le montrent de façon schématique les figures 1 à 3. Dans le cadre d'un échange d'information, un premier signal 5 est ainsi généré par une borne source 2, et ce signal est à destination d'une borne particulière de l'installation domotique 4, dite borne destinataire 3. Bien entendu, la première est au moins apte à émettre et la deuxième est au moins apte à recevoir, voire aussi apte à émettre un signal d'acquittement 6 décrit plus loin. Le premier signal 5, généré par la borne source 2, peut éventuellement être reçu par d'autres bornes de l'installation domotique 4, qui le répéteront si cela correspond à leur fonction.

Le procédé de contrôle 100 vise ainsi à piloter le fonctionnement, en particulier en ce qui concerne la répétition, d'une borne de l'installation domotique 4, dite borne de répétition 1, qui reçoit le signal à destination de la borne destinataire 3, directement ou après répétition par une autre borne. Comme il apparaîtra plus clairement grâce à la description ci-dessous, la borne de répétition 1 peut intervenir ou non dans le chaînage utilisé entre la borne source 2 et la borne destinataire 3 pour que ces deux dernières puissent communiquer.

Le procédé de contrôle 100 comprend ainsi une étape de
réception première 101, au cours de laquelle la borne de répétition 1 reçoit un premier signal 5, à destination de la borne destinataire 3 différente d'elle et provenant de la borne source 2, ledit premier signal 5 ayant été étant émis directement par la borne source 2 ou répété par une autre borne de l'installation domotique 4, ainsi qu'une étape de
répétition première 102, au cours de laquelle la borne de répétition 1 répète ce premier signal 5. Comme il sera décrit par la suite, le procédé de contrôle 100 permet entre autres de vérifier un ensemble de conditions sur la base desquelles il sera décidé de répéter ou non le premier signal 5, c'est-à-dire décidé de réaliser ou non une répétition première 102.

Le premier signal 5 que reçoit la borne de répétition 1 lors de la réception première 101 peut avoir été généré par la borne source 2, auquel cas cela signifie que les deux bornes sont suffisamment proches pour qu'elles puissent communiquer, mais il peut aussi provenir de la répétition, par une autre borne de l'installation domotique 4, du premier signal 5 émis initialement par la borne source 2.

Le cas d'une réception première 101 d'un premier signal 5 généré par un répéteur, en particulier une autre borne de répétition 1 fonctionnant selon le procédé de contrôle 100, correspond à une configuration dans laquelle la borne source 2 et la borne destinataire 3 communiquent par l'intermédiaire d'au moins une autre borne formant répéteur, autrement dit une autre borne de répétition 1.

Selon l'invention, la répétition première 102 n'est pas réalisée si la borne de répétition 1 n'est pas capable de communiquer avec la borne destinataire 3, ce qui permet donc d'éviter certaines répétitions et donc des sources de bruit ou de nuisance dans l'installation domotique 4. Il est aussi envisageable que la répétition première 102 ne soit pas non plus réalisée dans le cas où la borne de répétition 1 est capable de communiquer avec la borne destinataire 3, mais que cette dernière est capable de communiquer avec la borne source 2 sans l'intervention de la borne de répétition 1, ce qui peut se révéler utile en particulier lorsque ces deux bornes sont fixes.

Comme il sera décrit plus loin, la capacité de communiquer ou non entre la borne de répétition 1 et la borne destinataire 3 peut être déduite, par exemple, d'une donnée mémorisée représentative de cette capacité, ou encore de la réception par la borne de répétition 1 d'un signal qu'émet la borne destinataire 3, par exemple un signal d'acquittement 6, comme décrit plus loin. La puissance du signal reçu pourra aussi être prise en compte.

Afin d'éviter des répétitions inutiles, la borne de répétition 1 mémorise préférentiellement, le cas échéant, le fait qu'elle a mis en oeuvre une répétition première 102 pour le premier signal 5 particulier, et une répétition première 102 ultérieure peut ainsi être évitée si la borne de répétition 1 détecte qu'elle a déjà répété le même premier signal 5 lors d'une répétition première 102 antérieure.

Selon une caractéristique additionnelle possible, la capacité de communiquer ou non entre la borne destinataire 3 et la borne de répétition 1 est évaluée sur la base de la réception, par la borne de répétition 1, d'un signal d'acquittement 6 à destination de la borne source 2 et confirmant que la borne destinataire 3 a bien reçu le premier signal 5, ledit signal d'acquittement 6 étant généré par la borne destinataire 3 ou par une autre borne qui le répète,
la non réception étant considérée comme une incapacité à communiquer entre la borne de répétition 1 et la borne destinataire 3 et menant donc à une répétition première 102.

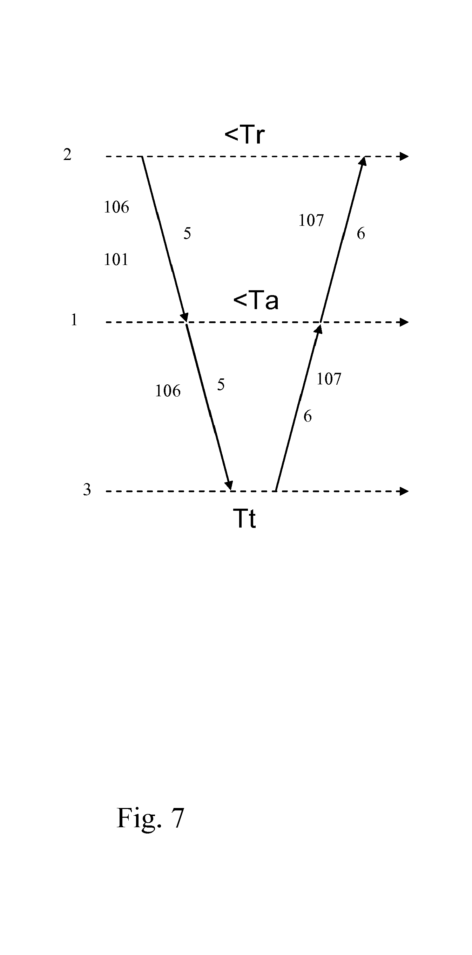

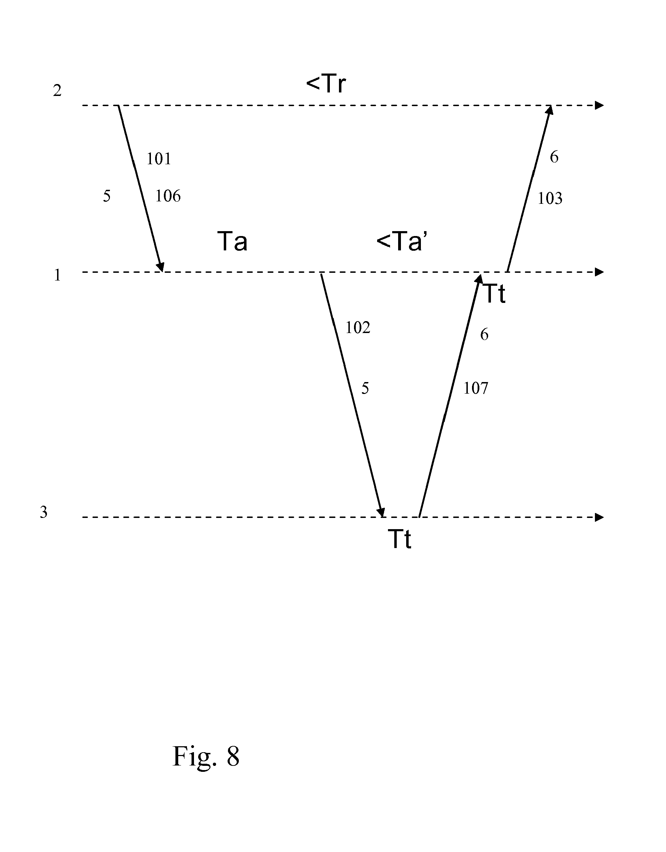

Le temps écoulé entre la réception première 101 et l'éventuelle réception ultérieure d'un signal d'acquittement peut être pris en compte. Ainsi, il est particulièrement avantageux de ne pas tenir compte d'un signal d'acquittement 6 reçu par la borne de répétition 1 après une durée prédéterminée suite à la première réception 101, Ta, voir figures 7 ou 8. Ainsi, la non réception d'un acquittement 6 avant la fin d'une période de temps prédéfinie Ta suite à la réception première 101, ou même la réception d'un tel signal mais après cette période de temps Ta, sont considérées comme une incapacité à communiquer entre la borne de répétition 1 et la borne destinataire 3, et la borne de répétition 1 répétera alors le premier signal 5.

Suite à la réception du premier signal 5 qui lui est destiné, la borne destinataire 3 fonctionne normalement par la génération d'un signal d'acquittement 6, alors à destination de la borne source 2, qui lui arrive directement ou après au moins une répétition. Il est donc proposé ici de ne pas procéder à la répétition première 102 dans le cas où la borne de répétition 1 perçoit un signal d'acquittement 6 correspondant au premier signal 5 reçu préalablement. Cela signifie alors, d'une part, que la borne destinataire 3 et la borne 2 peuvent communiquer sans l'intervention de la borne de répétition 1, mais aussi, d'autre part, que la borne destinataire 3 et la borne de répétition 1 sont suffisamment proches pour communiquer. Ainsi, il est possible, dans ce cas, d'éviter la répétition d'un premier signal 5 déjà reçu par la borne destinataire 3.

La borne de répétition 1 comprend donc une unité de traitement capable d'analyser le contenu du premier signal 5 qu'elle reçoit, d'initier le décompte d'une temporisation, Ta ou autres, voir plus loin, puis de commander la répétition première 102 en cas d'absence de réception, dans une plage temporelle prédéfinie Ta, d'un signal d'acquittement 6 correspondant.

Classiquement, un signal comme le premier signal 5 contient comme information au moins l'identité de la borne source 2, l'identité de la borne destinataire 3, ainsi que le message. Le signal d'acquittement 6 contient alors une information permettant d'identifier le premier signal 5 correspondant.

L'unité de traitement est aussi capable d'analyser le signal d'acquittement 6 afin d'identifier le signal dont il confirme la bonne réception.

La borne de répétition 1 comprend avantageusement aussi une unité de mémoire, dans le but de stocker les diverses informations décrites ici, en particulier les informations nécessaires pour conclure, après décodage, quant à la correspondance entre le premier signal 5 et le signal d'acquittement 6 reçus.

Une temporisation Ta, voir figure 7, peut ainsi être prévue à partir de la réception première 101 et à l'expiration de laquelle la répétition première 102 est mise en oeuvre, même en cas de réception ultérieure d'un signal d'acquittement 6.

Bien entendu, le signal d'acquittement 6 que reçoit la borne de répétition 1 peut avoir été généré directement par la borne destinataire 3 ou, comme il sera encore décrit plus loin pour des cas plus complexes, répété par au moins une autre borne de l'installation domotique 4.

Selon une autre caractéristique additionnelle possible, la capacité de communiquer ou non entre la borne destinataire 3 et la borne de répétition 1 est évaluée sur la base du contenu d'une mémoire 8, avantageusement d'une mémoire dont ladite borne de répétition 1 est pourvue.

Ainsi, à l'occasion de la première réception 101, la borne de répétition 1 consulte cette mémoire et, si elle contient déjà une information confirmant que la communication n'est pas possible entre elle-même et la borne destinataire 3, la répétition première 102 ne sera pas mise en oeuvre.

Dans les cas où la borne de répétition 1 n'a pas antérieurement mémorisé d'information relative à sa capacité ou incapacité de communiquer avec la borne destinataire 3 du premier signal 5, il reste souhaitable d'attendre l'éventuelle réception d'un signal d'acquittement 6, préférentiellement dans la limite d'une temporisation Ta, pour mettre en oeuvre ou non la répétition première 102, conformément à ce qui est mentionné plus haut.

La mémoire 8 peut aussi contenir une information selon laquelle la borne destinataire 3 et la borne de répétition 1 sont capables de communiquer. Toutefois, dans ce cas, et comme il sera encore décrit plus loin, des conditions supplémentaires peuvent être vérifiées avant de mettre en oeuvre la répétition première 102, en particulier la capacité de la borne source 2 et de la borne destinataire 3 à communiquer sans l'intervention de la borne de répétition 1 et/ou la capacité de la borne source 2 et de la borne destinataire 3 à communiquer en cas d'intervention de la borne de répétition 1.

La mémorisation de la capacité de communication permet en particulier, soit d'éviter de répéter ultérieurement un premier signal 5 à destination d'une borne destinataire 3 avec laquelle la borne de répétition 1 ne peut pas communiquer et donc de ne pas nuire à la communication dans l'installation domotique 4 en répétant inutilement des signaux, soit d'éviter d'attendre la fin d'une temporisation pour mettre en oeuvre la répétition première 102 et donc d'accélérer la communication entre la borne source 2 et la borne destinataire 3. Comme il a été dit, la circulation de signaux non nécessaires gêne la bonne communication dans l'installation domotique 4, en empêchant l'échange de messages nécessaires, ou en dénaturant les signaux.

La donnée mémorisée représentative de la capacité de communiquer ou non entre la borne de répétition 1 et la borne destinataire 3 peut provenir d'un paramétrage particulier, d'un test spécifique, ou autres. Avantageusement, il peut pour cela être tenu compte de la réception, par la borne de répétition 1, d'un signal émis par la borne destinataire 3 ou répété, en particulier de la réception du signal d'acquittement 6 correspondant au premier signal 5.

Ainsi, selon une caractéristique additionnelle possible du procédé de contrôle 100, il comprend une étape de mémorisation, mise en oeuvre en cas de réception, par la borne de répétition 1, d'un signal d'acquittement 6 à destination de la borne source 2 et confirmant que la borne destinataire 3 a bien reçu le premier signal 5, ledit signal d'acquittement 6 étant généré par la borne destinataire 3 ou par une autre borne qui le répète,

ladite étape de mémorisation consistant alors essentiellement à mémoriser que la borne de répétition 1 est capable de communiquer avec la borne destinataire 3, voire aussi que la borne source 2 est capable de communiquer avec la borne destinataire 3 sans l'intervention de la borne de répétition 1, cette mémorisation se faisant notamment avantageusement dans une mémoire 8 dont est pourvue la borne de répétition 1.

Préférentiellement, seule la réception d'un signal d'acquittement 6 avant la répétition première 102 conduit à la mise en oeuvre de la mémorisation de l'une et/ou l'autre de ces deux données. En l'absence d'une telle réception d'un signal d'acquittement 6, le procédé peut aussi mémoriser une incapacité de communiquer entre la borne source 2 et la borne destinataire 3 sans l'intervention de la borne de répétition 1. En effet, avantageusement, la capacité d'une borne source 2 à communiquer avec une borne destinataire 3 sans l'intervention de la borne de répétition 1 peut aussi être prise en compte pour décider de mettre en oeuvre ou non l'étape de première répétition 102.

Là aussi, il peut être pertinent de ne pas tenir compte d'un signal d'acquittement 6 reçu après la fin d'une période de temps prédéfinie Ta suite à la réception première 101. Ainsi, cette mémorisation ne sera effectuée que si un signal d'acquittement 6 arrive dans cette période de temps. La non réception pendant cette période Ta ou encore la réception après cette période n'amène pas à mémoriser les capacités de communication mentionnées ci-dessus.

Selon une caractéristique additionnelle possible, en cas de première réception 101 d'un premier signal 5, provenant d'une borne source 2 et à destination d'une borne destinataire 3, le contenu d'une mémoire est consulté pour conclure quant à la capacité de communiquer entre la borne de répétition 1 et la borne destinataire 3,
la répétition première 102 étant mise en oeuvre dès lors que le contenu de cette mémoire permet de conclure que la borne de répétition 1 et la borne destinataire 3 sont capables de communiquer, voire toutefois seulement dans la mesure où le contenu de cette mémoire permet aussi de conclure que la borne source 2 et la borne destinataire 3 ne sont pas capables de communiquer sans l'intervention de la borne destinataire 1, la répétition première 102 étant en particulier mise en oeuvre peu après la première réception 101.

Ainsi, il n'est pas nécessaire d'attendre la fin d'une temporisation Ta à partir de la première réception 101 pour mettre en oeuvre la répétition première 102, ce qui permet donc d'accélérer la transmission d'information entre la borne source 2 et la borne destinataire 3.

Selon une autre caractéristique additionnelle possible, en cas de première réception 101 d'un premier signal 5, provenant d'une borne source 2 et à destination d'une borne destinataire 3, le contenu d'une mémoire est consulté pour conclure quant à la capacité de communiquer entre la borne source 2 et la borne destinataire 3,
la répétition première 102 n'étant pas mise en oeuvre dès lors que le contenu de cette mémoire permet de conclure que la borne source 2 et la borne destinataire 3 sont capables de communiquer sans l'intervention de la borne de répétition 1. Il est ainsi possible d'éviter des répétitions non indispensables. Comme il a été écrit plus haut, on peut considérer que la borne source 2 et la borne destinataire 3 sont capables de communiquer sans l'intervention de la borne de répétition 1 en cas de réception par cette dernière d'un signal d'acquittement 6 provenant de la borne destinataire 3, suite à la réception première 101 du premier signal 5 correspondant, mais sans qu'elle ne l'ait encore répété lors d'une première répétition 102.

Selon une caractéristique additionnelle possible du procédé de contrôle 100, il comprend une étape, mise en oeuvre par la borne de répétition 1, en cas de réception, après la répétition première 102, d'un signal d'acquittement 6 à destination de la borne source 2 et confirmant que la borne destinataire 3 a bien reçu le premier signal 5, ledit signal d'acquittement 6 étant généré par la borne destinataire 3 ou par une autre borne qui le répète,
ladite étape consistant essentiellement en une répétition d'acquittement 103, au cours de laquelle la borne de répétition 1 répète le signal d'acquittement 6. La répétition d'acquittement 103 peut toutefois ne pas être réalisée si le signal d'acquittement 6 est reçu après la fin d'une période de temps prédéfinie Ta', voir figure 8, à partir de la réception première 101 ou préférentiellement de la répétition première 102.

Avantageusement, le procédé peut aussi comprendre une étape ultérieure, mise en oeuvre dans le cas où la répétition d'acquittement 103 s'effectue, et consistant essentiellement à mémoriser, avantageusement dans une mémoire 8 dont dispose la borne de répétition 1, que
- la borne de répétition 1 est capable de communiquer avec la borne destinataire 3, et/ou
- la borne source 2 et la borne destinataire 3 sont incapables de communiquer sans l'intervention la borne de répétition 1, et/ou
- la borne source 2 et la borne destinataire 3 sont capables de communiquer grâce à l'intervention de la borne de répétition 1, et/ou
- la borne de répétition 1 a répété un acquittement 103 pour ce premier signal 5.

Cette répétition d'acquittement 103 n'est notamment mise en oeuvre que si le signal d'acquittement 6 correspond à un premier signal 5 que la borne de répétition 1 a effectivement répété lors d'une étape antérieure de répétition première 102. Cette répétition d'acquittement 103 n'est préférentiellement pas non plus mise en oeuvre si un signal d'acquittement 6 pour le même premier signal 5 a été répété lors d'une répétition d'acquittement 103 antérieure.

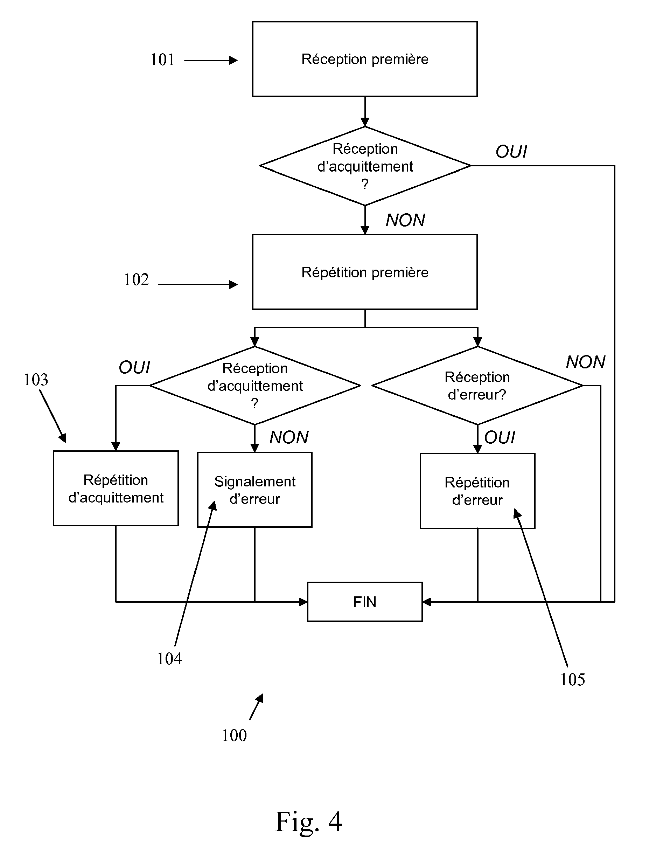

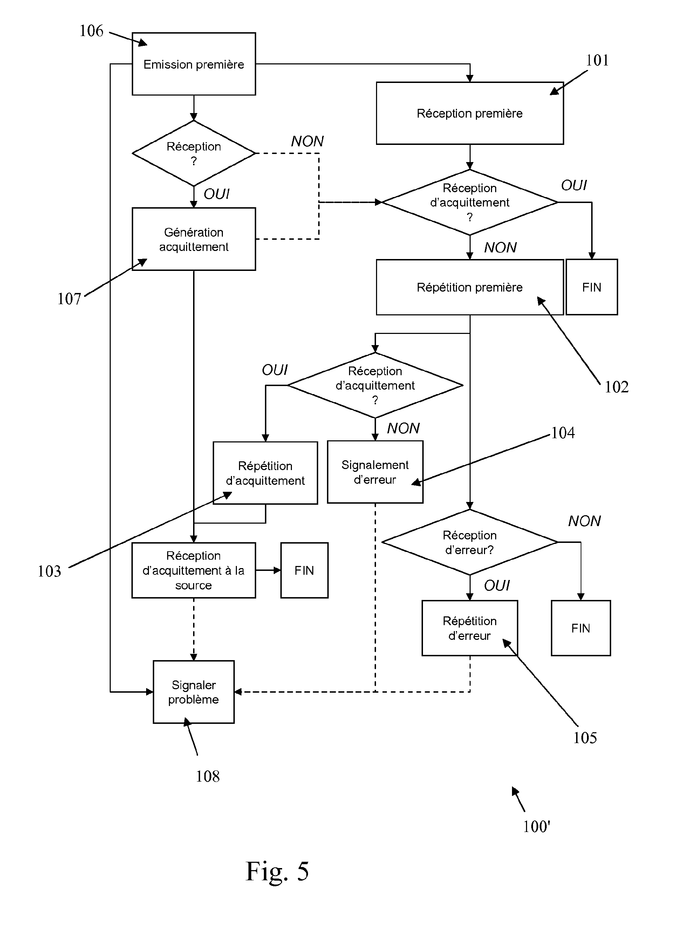

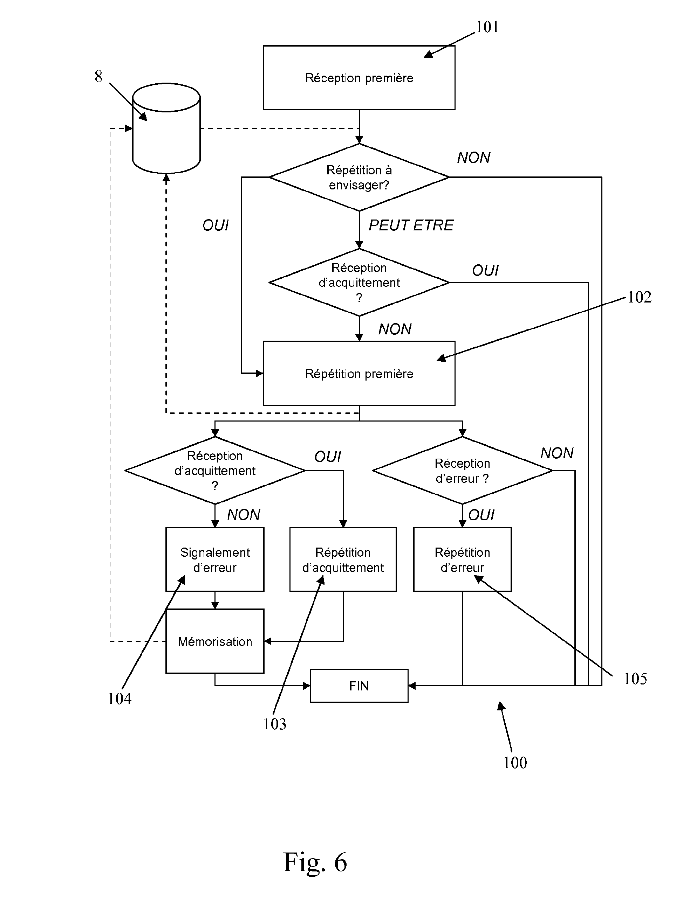

Dans l'exemple illustré aux figures 4 à 6, la répétition d'acquittement 103 n'a effectivement lieu que suite à la répétition première 102, ce qui contribue à éviter la répétition d'un signal d'acquittement 6 émis par une autre source, alors que le signal d'acquittement 6 généré par la borne destinataire 3 elle-même a déjà été reçu.

La répétition d'acquittement 103 permet donc de répéter un signal d'acquittement 6 généré par la borne destinataire 3, suite à sa réception du premier signal 5 répété jusqu'à elle par la borne de répétition 1. Ce signal d'acquittement 6 est donc répété par la borne de répétition 1, et peut être reçu par la borne source 2, soit directement si cette dernière est suffisamment proche de la borne de répétition 1, soit indirectement, par l'intermédiaire d'au moins un répéteur formé par une autre borne de répétition 1.

On comprendra aisément que, dans le cas d'une borne de répétition 1 se trouvant dans un chaînage à plusieurs maillons entre la borne source 2 et la borne destinataire 3, le premier signal 5 reçu par la borne de répétition 1 ou par la borne destinataire 3 peut être celui généré par la borne source 2 ou alors répété par une autre borne de répétition 1, le signal d'acquittement 6, reçu par la borne de répétition 1 ou la borne source 2, pouvant être généré par la borne destinataire 3 ou répété par une autre borne de répétition 1.

La condition de réception d'acquittement, montrée en particulier dans les figures 4 à 6, peut être limitée à une durée prédéterminée Ta' à partir de la répétition première 102. En effet, il peut ne pas être souhaitable de répéter un signal acquittement 6 si celui-ci-est trop tardif, puisque la circulation d'information de la borne source 2 à la borne destinataire 3 ne peut être satisfaisante que si elle se fait avec une vitesse suffisamment élevée. Dans une installation domotique 4 complexe, la borne de répétition 1 et la borne destinataire 3 peuvent réussir à communiquer suite à un grand nombre de répétition, ce qui n'est toutefois pas satisfaisant. Seul un signal d'acquittement 6 reçu avant la fin de cette temporisation Ta' sera répété 103. A défaut de réception d'un acquittement avant la fin de cette période de temps, la borne de répétition 1 générera un signal d'erreur 7, lors d'une étape dite de signalement d'erreur 104 telle que décrite ci-dessous.

En effet, selon une caractéristique additionnelle possible du procédé de contrôle 100, il comprend une étape de signalement d'erreur 104, mise en oeuvre par la borne de répétition 1 après la répétition première 102, et en cas de non réception, préférentiellement avant la fin d'une période de temps prédéfinie à partir de la réception première 101 ou de la répétition première 102, d'un signal d'acquittement 6 à destination de la borne source 2 et confirmant que la borne destinataire 3 a bien reçu le premier signal 5, ledit signal d'acquittement 6 étant généré par la borne destinataire 3 ou par une autre borne qui le répète,
ladite étape consistant essentiellement en la génération, par la borne de répétition 1, d'un signal d'erreur 7 sans fil à destination de la borne source 2 émettrice du premier signal 5 et utile pour identifier un défaut de communication entre la borne source 2 et la borne destinataire 3.

Avantageusement, le signal d'erreur 7 généré contient ainsi une information relative au premier signal 5 que la borne de répétition 1 a répété lors d'une étape de répétition première 102 antérieure mais dont aucun acquittement n'a été reçu. Il est ainsi possible d'éviter de répéter ultérieurement un acquittement 103 relatif au même premier signal 5 mais qui arriverait après l'expiration d'une durée prédéfinie.

En outre, le procédé comprend des étapes ultérieures au signalement d'erreur 104, et consistant essentiellement à mémoriser, avantageusement dans une mémoire 8 dont dispose la borne de répétition 1, que la borne de répétition 1
- a signalé une erreur 104 pour ce premier signal 5, et/ou
- n'est pas capable de communiquer avec la borne destinataire 3.

Dans le cas où, suite à la répétition première 102, la borne de répétition 1 ne réceptionne aucun signal d'acquittement 6, il est donc prévu que la borne de répétition 1 génère un signal d'erreur 7, à destination de la borne source 2, afin de lui rapporter un défaut de communication jusqu'à la borne destinataire 3.

Selon une autre caractéristique additionnelle possible du procédé de contrôle 100, il comprend une étape, mise en oeuvre par la borne de répétition 1, en cas de réception par lui d'un signal d'erreur 7 après la répétition première 102,

ladite étape consistant essentiellement en une répétition d'erreur 105, au cours de laquelle ledit signal d'erreur 7 est répété. Il est toutefois avantageux de ne pas mettre en oeuvre la répétition d'erreur 105 si le signal d'erreur 7 est reçu après d'une période de temps prédéfinie à partir de la répétition première 102.

Afin de réduire les répétitions dans l'installation domotique 4, la répétition d'erreur 105 n'est toutefois mise en oeuvre que si le signal d'erreur 7 sans fil correspond à un premier signal 5 que la borne de répétition 1 a répété lors d'une étape antérieure de répétition première 102. En outre, cette répétition d'erreur 105 n'est préférentiellement pas non plus effectuée si la borne de répétition 1 a préalablement :
- répété 103 un signal d'acquittement 6 pour le même premier signal 5 au cours d'une étape de répétition d'acquittement 103 antérieure, et/ou
- généré 104 un signal d'erreur 7 pour le même premier signal 5 au cours d'une étape de signalement d'erreur 104 antérieure, et/ou
- répété 105 un signal d'erreur 7 pour le même premier signal 5 au cours d'une étape de répétition d'erreur 105 antérieure.

Avantageusement, le procédé de contrôle 100 comprend aussi éventuellement une étape ultérieure à cette répétition d'erreur 105, et consistant essentiellement à mémoriser, avantageusement dans une mémoire 8 dont dispose la borne de répétition 1, que la borne de répétition 1 :
- a répété une erreur 105 pour ce premier signal 5, et/ou
- n'est pas capable de communiquer avec la borne destinataire 3.

Comme il a déjà été évoqué, il se peut que la borne de répétition 1 se trouve dans une succession de bornes utilisées entre la borne source 2 et la borne destinataire 3. En cas de défaut de communication entre la borne destinataire 3 et la dernière borne de répétition 1, c'est bien cette dernière qui génèrera un signal d'erreur 7, ensuite répété jusqu'à la borne source 2, grâce à l'étape de répétition d'erreur 105.

L'invention a aussi pour objet un procédé de communication 100' dans une installation domotique 4 comprenant un ensemble de bornes qui communiquent sans fil, dont au moins une borne source 2, apte à émettre un signal sans fil, au moins une borne destinataire 3, apte à recevoir un signal sans fil, ainsi qu'au moins une borne de répétition 1 sans fil, ladite borne étant apte à recevoir et envoyer des signaux sans fil, ledit procédé
comprenant une étape d'émission première 106 sans fil, par une ou la borne source 2, d'un premier signal 5, à destination de la ou d'une borne destinataire 3, et comprenant, en outre,
une étape de génération d'un acquittement 107, mise en oeuvre par la borne destinataire 3 consistant essentiellement à générer un signal d'acquittement 6 à destination de la borne source 2 et confirmant que la borne destinataire 3 a bien reçu le premier signal 5,
la ou une borne de répétition 1 mettant en oeuvre le procédé de contrôle 100 tel que décrit ci-dessus. La répétition du premier signal 5 étant ainsi régie par le procédé de contrôle 100 décrit ci-dessus.

Le procédé de communication 100', à l'exception de l'émission de l'acquittement 107, est donc mis en oeuvre grâce à la fois à la borne de répétition 1 et la borne source 2. Cette dernière émet ainsi le premier signal 5 à destination de la borne destinataire 3, ledit premier signal 5 sera ensuite éventuellement répété par une ou plusieurs bornes de répétition 1, conformément au procédé de contrôle 100 décrit plus haut, mis en oeuvre par les différentes bornes de répétition 1. La borne destinataire 3 est elle aussi nécessaire à la mise en oeuvre du procédé de communication 100' puisqu'elle assure la génération de l'acquittement 107, éventuellement répété.

Selon une caractéristique additionnelle possible du procédé de communication 100', il comprend une étape, mise en oeuvre par la borne source 2, en cas de non réception par elle, éventuellement avant la fin d'une période de temps Tr prédéfinie à partir de l'émission première 106, d'un signal d'acquittement 6 à destination de la borne source 2 et confirmant que la borne destinataire 3 a bien reçu le premier signal 5, ledit signal d'acquittement 6 étant généré par la borne destinataire 3 ou par une autre borne qui le répète,
ladite étape consistant essentiellement à rendre compte 108, d'un défaut de communication. Le défaut est éventuellement un défaut spécifique de communication avec la borne destinataire 3, par exemple avec un signal émis par la borne source 2 avec ou sans fil, par exemple à destination d'une centrale domotique, ou encore un signal acoustique ou visuel directement émis par la borne source 2.

L'invention a aussi pour objet un dispositif de communication sans fil pour installation domotique 4, apte à former une borne de répétition 1 pour la mise en oeuvre du procédé de contrôle 100 comme décrit ci-dessus, éventuellement aussi pour la mise en oeuvre du procédé de communication 100' comme décrit ci-dessus.

L'invention a aussi pour objet un dispositif de communication sans fil pour installation domotique 4, apte à former une borne source 2 pour la mise en oeuvre du procédé de communication 100' comme décrit ci-dessus.

Ainsi, une fois l'installation domotique en fonctionnement normal, le procédé de contrôle 100 est mis en oeuvre par une borne de répétition 1, pouvant former un répéteur. Il s'agit donc d'un appareil au moins apte à recevoir et à émettre un signal sans fil. Le procédé de contrôle 100 régit ainsi la façon avec laquelle la borne de répétition 1 répète un signal.

Dans le réseau sans fil que présente l'installation domotique 4, un signal est émis par une borne source 2, qui peut être un émetteur d'ordre comme une télécommande mobile, un capteur, ou encore une centrale domotique encastrée dans un mur, etc. Le signal émis par la borne source 2 est généralement à destination spécifique d'une borne destinataire 3 dans l'installation domotique 4, qui peut être une centrale domotique, un actionneur ou autres. Le signal transmis code ainsi généralement au moins ces deux données, à savoir l'identité de la borne source 2 et l'identité de la borne destinataire 3, ainsi que le message lui-même, qui peut être une instruction de contrôle, un résultat de mesure, ou autres.

Lorsque la borne source 2 et la borne destinataire 3 sont suffisamment proches, le signal émis par la borne source 2 peut être directement reçu par la borne destinataire 3. Dans le cas contraire, il est reçu par la borne destinataire 3 grâce à au moins un répéteur, autrement dit une borne de répétition 1 pouvant recevoir et émettre, à savoir recevoir le signal provenant de la borne source 2, directement de cette borne ou après répétition, et l'émettre à nouveau à destination de la borne destinataire 3, directement ou après répétition.

La répétition, par la borne de répétition 1, d'un signal reçu n'est pas nécessaire lorsque la borne destinataire 3 l'a reçu elle aussi. Comme la borne destinataire 3 envoie, en cas de réception d'un signal qui lui est destiné, un acquittement 6 correspondant, la réception de cet acquittement par la borne de répétition 1 peut être la confirmation que cette dernière n'a pas besoin de répéter le signal. C'est une des conditions proposées dans l'invention pour réduire les nuisances dans la communication sans fil au sein de l'installation domotique 4. La borne de répétition 1 ne répétera donc un signal reçu que dans la mesure où elle n'a pas reçu, en outre, l'acquittement correspondant de la part de la borne destinataire 3. La réception, par la borne de répétition 1, de l'acquittement 6 du premier signal 5 par la borne destinataire 3, ou encore la mémorisation des capacités de communication que cette réception représente, empêche la répétition de ce premier signal 5.

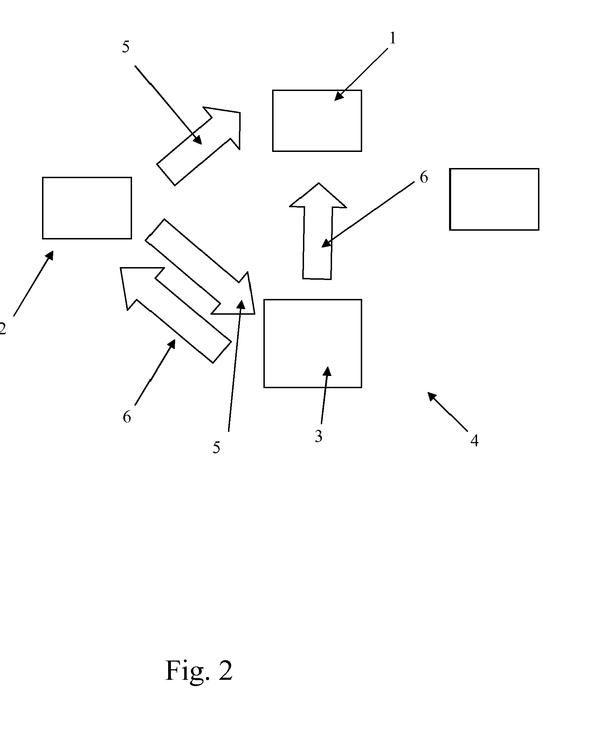

La figure 2 illustre une circulation d'information directe entre une borne source 2 et une borne destinataire 3. Le premier signal 5 est ainsi émis par la borne source 2, dont les signaux peuvent être reçus tant par la borne de répétition 1 pouvant fonctionner en répéteur, que directement par la borne destinataire 3 elle-même.

Dans cette figure, suite à la réception du premier signal 5 qui ne lui est pas destiné, la borne de répétition 1 va veiller à l'éventuelle circulation d'un signal d'acquittement 6 correspondant, en provenance de la borne destinataire 3 et pour la borne source 2. Comme il a été dit plus haut, la réception ou non d'un tel signal d'acquittement 6 est une condition de répétition par la borne de répétition 1. Préférentiellement, seul un acquittement reçu avant l'extinction d'une temporisation Ta lancée suite à la réception du premier signal 5 par la borne de répétition 1 peut être pris en compte pour éviter la répétition : à défaut de réception d'un acquittement avant la fin de cette temporisation, la borne de répétition 1 répétera le premier signal 5.

A la réception du premier signal 5 qui lui est destiné, la borne destinataire 3, quant à elle, émet un signal d'acquittement 6, pouvant être reçu par la borne source 2, puisque ces deux sont suffisamment proches pour communiquer. Comme la borne destinataire 3 et la borne de répétition 1 sont à portée l'une de l'autre et peuvent communiquer, le signal d'acquittement 6 est aussi reçu par la borne de répétition 1, éventuellement dans la mesure où ce signal d'acquittement 6 est reçu dans la période de temps décrite ci-dessus. La borne de répétition 1 ne répète alors pas le premier signal 5, limitant ainsi la perturbation d'autres communications.

Le chronogramme correspondant à cette situation est représenté à la figure 7, le premier signal 5 pouvant être reçu tant par la borne de répétition 1 que par la borne destinataire 3. Après un temps de traitement Tt, la borne destinataire 3 envoie le signal d'acquittement 6 correspondant. Ce signal d'acquittement 6 est reçu par la borne de répétition 1 avant la fin d'une temporisation Ta lancée à la réception première 101 du premier signal 5, la borne de répétition 1 ne répétant par conséquent pas le premier signal 5. Le signal d'acquittement 6 est aussi reçu par la borne source 2, et ce avant la fin d'une temporisation Tr lancée à l'émission du premier signal 5, la borne source 2, comportant les moyens adéquats pour ce faire, déduit donc que le signal a été correctement reçu par son destinataire.

La borne de répétition 1 ne répétera donc un signal que dans le cas particulier où elle se trouve à portée de l'émetteur dudit signal, alors que la borne destinataire 3 se trouve hors de portée d'au moins l'un d'eux, étant entendu que l'émetteur peut être la borne source 2 ou une autre borne de répétition 1 fonctionnant en répéteur. Dans ce cas, soit la borne destinataire 3 ne reçoit pas le signal et donc ne l'acquitte pas, soit son acquittement n'est pas reçu.

Une telle situation est par exemple illustrée avec la figure 1. Le premier signal 5 est émis par la borne source 2, et reçu par la borne de répétition 1, mais pas par la borne destinataire 3. En l'absence d'acquittement de la part de cette dernière, à la fin d'une durée Ta s'écoulant depuis la réception du premier signal 5 par la borne de répétition 1, cette dernière répète le premier signal 5. La borne destinataire 3 étant à portée de la borne de répétition 1, elle peut recevoir le signal qui lui est destiné, et émettre par conséquent un signal d'acquittement 6. Ce signal d'acquittement 6, reçu par la borne de répétition 1, préférentiellement avant la fin d'une temporisation Ta' démarrée soit à la réception du premier signal 5 soit à sa répétition, est ensuite répété par la borne de répétition 1 et reçu par la borne source 2. L'acquittement 6 confirme donc à la borne source 2 la bonne circulation du signal jusqu'à la borne destinataire 3. Une temporisation peut toutefois être prévue au niveau de la borne d'émission 2, alors pourvu de moyens adaptés pour ce faire, dans le but de ne conclure à la bonne circulation d'information que dans le cas où l'acquittement 6 est reçu avant la fin d'une temporisation Tr démarrée à l'émission du premier signal 5.

Le chronogramme correspondant de cette situation est celui de la figure 8. Il y est montré en particulier que la répétition 102 n'est mise en oeuvre par la borne de répétition 1 qu'à l'extinction d'une période de temps Ta suivant la réception par lui du premier signal 5. Le premier signal 5, reçu par la borne destinataire 3 après répétition par la borne de répétition 1, génère, après traitement pendant une durée Tt propre à la borne destinataire 3, l'envoi d'un signal d'acquittement 6. Ce signal d'acquittement 6, reçu par la borne de répétition 1 avant l'expiration d'une période de temps Ta' débutant à la réception du premier signal ou à sa répétition, est ensuite répété par la borne de répétition 1, et finalement reçu par la borne source 2.

La borne de répétition 1 peut évidemment recevoir le premier signal 5 non pas de la borne source 2 directement mais par au moins une autre borne de répétition 1 qui le répète, et donc faire aussi remonter un signal d'acquittement 6 à la borne source 2 non pas directement mais à travers cette au moins une autre borne de répétition 1 qui le répète. La borne source 2 et la borne de répétition 1 échangent donc des signaux de façon indirecte.

La borne de répétition 1 peut aussi émettre le premier signal 5 non pas directement à la borne destinataire 3, mais par au moins une autre borne de répétition 1 qui le répète, le signal d'acquittement 6 n'étant alors pas non plus reçu directement depuis la borne destinataire 3 mais depuis cette autre au moins une borne de répétition 1 qui le répète. La borne destinataire 3 et la borne de répétition 1 échangent alors des signaux de façon indirecte.

Le réseau sans fil de l'installation domotique 4 peut être tel que la borne de répétition 1 échange des signaux de façon indirecte avec la borne source 2 ainsi que de façon indirecte avec la borne destinataire 3, plusieurs successions différentes de répétitions peuvent donc permettre à la borne source 2 de communiquer avec la borne destinataire 3.

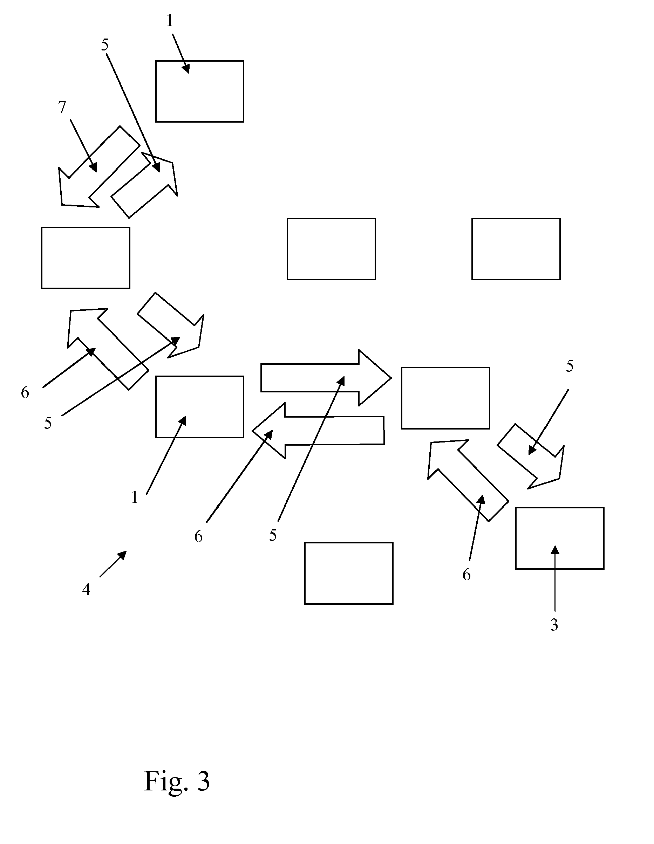

La figure 3 illustre un flux d'information reposant sur plus d'une borne de répétition 1 formant chacune répéteur. La borne source 2 émet ainsi un premier signal 5, reçu par une première borne de répétition 1. Cette première réception 101 déclenche une temporisation, au bout de laquelle elle ne reçoit aucun signal d'acquittement 6, et, par conséquent, elle effectue la répétition première 102 de ce premier signal 5. Le premier signal 5 répété est ensuite reçu par une deuxième borne de répétition 1, qui traite donc ce signal conformément au procédé décrit, comme si ce signal avait été généré par la borne source 2 elle-même.

Le premier signal répété 5 est alors reçu par la deuxième borne de répétition 1, déclenchant à nouveau une temporisation, au bout de laquelle, comme aucun signal acquittement 6 n'est reçu, elle répète à son tour le premier signal 5. Comme la borne destinataire 3 et cette deuxième borne de répétition 1 sont suffisamment proches pour communiquer, le premier signal 5 est finalement reçu par la borne destinataire 3, qui émet alors un signal d'acquittement 6, à destination de la borne source 2. Ce signal d'acquittement 6 sera successivement répété par la deuxième borne de répétition 1 puis par la première borne de répétition 1, et finalement reçu par la borne source 2. Des chaînages trop longs ne sont toutefois pas souhaitables, et le recours à une temporisation Tr, au terme de laquelle la non réception d'un acquittement 6 provoque l'émission d'un signal d'erreur 7, permet d'éviter que la réception ultérieure d'un signal d'acquittement 6 ne soit considérée comme représentative d'un fonctionnement satisfaisant.

Il convient de noter que la figure 3 illustre aussi le cas d'une borne de répétition 1 qui reçoit le premier signal 5, mais qui ne reçoit pas le signal d'acquittement 6. Le premier signal 5 est en effet reçu par une troisième borne de répétition 1 directement de la borne source 2, ce qui lance la temporisation Ta. A l'extinction de cette temporisation, comme aucun signal d'acquittement 6 n'est perçu par la troisième borne de répétition 1, elle génèrera un signal sans fil d'erreur 7, qui sera alors, dans le cas de la figure 3, reçu directement par la borne source 2. Bien entendu, le signal d'erreur 7 peut aussi être généré au terme d'une succession de répétitions, au quel cas c'est au moins la dernière borne du chaînage qui signale une erreur 104 en générant un signal d'erreur 7, répété ensuite par les bornes de répétition 1 qui la séparent de la borne source 2.

Une autre façon d'éviter les répétitions inutiles peut consister, pour une borne de répétition 1, à ne répéter un signal que s'il est à destination d'une borne destinataire 3 avec qui elle peut communiquer, éventuellement après répétition, voire préférentiellement directement.

Cette deuxième façon d'éviter certaines répétitions peut être alternative ou additive à celle décrite ci-dessus et consistant essentiellement à ne pas répéter un premier signal 5 dont le signal d'acquittement 6 a été reçu.

Dans tous les cas, les capacités de communication sont préférentiellement mémorisées, afin d'accélérer les répétitions ultérieures.

Ainsi, conformément à cette deuxième façon d'éviter des répétitions non indispensables, la borne de répétition 1 mémorise sa capacité à échanger de l'information avec chaque borne destinataire 3 possible, et en tient compte pour répéter ou non un signal. La possibilité de communiquer entre une borne destinataire 3 et une borne de répétition 1 peut être évaluée lorsque cette dernière émet un signal destinée à la première, sans recevoir ultérieurement de signal d'acquittement 6 correspondant, éventuellement dans une fenêtre temporelle suivant l'émission. Lorsque la borne de répétition 1 effectue la répétition première 102 d'un premier signal 5 à destination d'une borne destinataire 3, que ce signal ait été généré par la borne source 2 ou par une autre borne de répétition 1 formant répéteur, la non réception d'un signal acquittement 6, éventuellement avant l'expiration d'une temporisation Ta' démarrée à la répétition première 102, provoque, d'une part, un signalement d'erreur 104, mais aussi, d'autre part, la mémorisation d'une incapacité, pour la borne de répétition 1, à communiquer avec la borne destinataire 3. Cette incapacité à échanger des informations peut correspondre à une incapacité à échanger de l'information directement, indirectement, ou une incapacité à échanger de l'information suffisamment rapidement.

Si la borne de répétition 1 reçoit le signal d'acquittement 6 provenant de la borne destinataire 3, directement ou non, éventuellement dans la limite d'une temporisation, la borne de répétition 1 mémorise alors sa capacité à communiquer avec la borne destinataire 3, cette information étant utilisée ultérieurement pour accélérer la répétition.

La borne de répétition 1 comprend ainsi une mémoire 8 dans laquelle sont enregistrées successivement les capacités de communication, notamment entre elle et d'autres bornes, qui ont été les destinataires de premier signaux 5 que ladite borne de répétition 1 a reçus. Des règles de mise à jour peuvent aussi être utilisées, notamment pour prendre en compte un éventuel changement de positionnement relatif entre la borne de répétition 1 et la borne destinataire 3, par exemple détecté sur la base d'une modification de puissance du signal.

Ainsi, ultérieurement, à l'occasion de la réception première 101 d'un premier signal 5, la borne de répétition 1 consulte cette mémoire, et, peut exploiter l'information de la façon suivante :
- en cas d'impossibilité, déjà identifiée auparavant, de communiquer avec la borne destinataire 3 du premier signal 5, ce dernier ne sera pas répété, la consultation de la mémoire pouvant alors éventuellement se poursuivre directement par un signalement d'erreur 104 ;
- en cas de possibilité, déjà identifiée auparavant, de communiquer avec la borne destinataire 3 du premier signal, ce dernier sera répété, sans attendre la fin d'une éventuelle temporisation qu'il faudrait autrement attendre pour conclure, en cas de non réception du signal d'acquittement 6 correspondant, quant à la nécessité d'engager une répétition première 102 ;
- il peut en outre être tenu compte de la possibilité ou de l'impossibilité des bornes source 2 et destinataire 3 de communiquer avec ou sans l'intervention de la borne de répétition 1 ;
- en cas d'absence d'information quant à la possibilité de communiquer avec la borne destinataire 3, soit seule la réception d'un signal d'acquittement 6 correspondant, éventuellement avant l'expiration d'une temporisation Ta, évite la répétition première 102 du premier signal 5, soit le signal est répété indépendamment de toute notion de réception de signal d'acquittement 6.

En outre, comme les bornes de l'installation domotique 4 sont susceptibles d'être déplacées pour diverses raisons, que ce soit une reconception de l'installation ou simplement un déplacement d'une borne mobile, comme une télécommande, il se peut que les capacités à communiquer de la borne de répétition 1 et/ou la borne source 2 et/ou la borne destinataire 3 changent. Il peut donc être pertinent d'assurer un rafraichissement du contenu de la mémoire 8, afin de tenir compte de ces changements.

Par exemple, la puissance des différents signaux reçus de la part de ces bornes peut être surveillée et mémorisée de façon spécifique, en particulier
- pour le premier signal 5 ;
- pour le signal d'acquittement 6 reçu avant la répétition première 102, dont la puissance reflète la capacité de communication entre la borne de répétition 1 et la borne destinataire 3, mais aussi la capacité de communication entre la borne source 2 et la borne destinataire 3 sans l'intervention de la borne de répétition 1, ou encore,
- pour le signal d'acquittement 6 reçu après la répétition première 102, et dont la puissance reflète tant la capacité de communication entre la borne de répétition 1 et la borne destinataire 3 que l'incapacité de communication entre la borne source 2 et la borne destinataire 3 sans l'intervention de la borne de répétition 1.

Ainsi, si la puissance du signal est plus faible que celle mémorisée, il pourra être considéré, puis mémorisé, que la capacité de communiquer correspondante est perdue. A l'inverse, si la puissance du signal est plus élevée que celle mémorisée, il pourra être considéré, et mémorisé, que la communication correspondante est désormais possible. Les étapes correspondantes du procédé seront alors mises en oeuvre de façon cohérente avec ces nouvelles informations.

Bien entendu, l'invention n'est pas limitée au mode de réalisation décrit et représenté aux dessins annexés. Des modifications restent possibles, notamment du point de vue de la constitution des divers éléments, par combinaison différente de tout ou partie des caractéristiques décrites ci-dessus, ou par substitution d'équivalents techniques, sans sortir pour autant du domaine de protection de l'invention.

## Revendications

1. Procédé de contrôle (100) d'une borne de répétition (1) sans fil, ladite borne étant apte à recevoir et envoyer des signaux sans fil, destinée à former l'une des bornes d'une installation domotique (4) comprenant un ensemble de bornes qui communiquent sans fil, dont au moins une borne source (2), apte à émettre un signal sans fil, au moins une borne destinataire (3), apte à recevoir un signal sans fil, procédé comprenant une étape de
réception première (101), au cours de laquelle la borne de répétition (1) reçoit un premier signal (5), à destination de la borne destinataire (3) différente d'elle et provenant de la borne source (2), ledit premier signal (5) ayant été étant émis directement par la borne source (2) ou répété par une autre borne de l'installation domotique (4), ainsi qu'une étape de
répétition première (102), au cours de laquelle la borne de répétition (1) répète ce premier signal (5),
procédé **caractérisé en ce que**
la répétition première (102) n'est pas réalisée si la borne de répétition (1) n'est pas capable de communiquer avec la borne destinataire (3).

2. Procédé de contrôle (100) selon la revendication 1, **caractérisé en ce que**
la capacité de communiquer ou non entre la borne destinataire (3) et la borne de répétition (1) est évaluée sur la base de la réception, par la borne de répétition (1), d'un signal d'acquittement (6) à destination de la borne source (2) et confirmant que la borne destinataire (3) a bien reçu le premier signal (5), ledit signal d'acquittement (6) étant généré par la borne destinataire (3) ou par une autre borne qui le répète,
la non réception étant considérée comme une incapacité à communiquer entre la borne de répétition (1) et la borne destinataire (3) et menant donc à une répétition première (102).

3. Procédé de contrôle (100) selon l'une quelconque des revendications 1 ou 2, **caractérisé en ce que**
la capacité de communiquer ou non entre la borne destinataire (3) et la borne de répétition (1) est évaluée sur la base du contenu d'une mémoire (8).

4. Procédé de contrôle (100) selon la revendication 3, **caractérisé en ce que**
il comprend une étape de mémorisation, mise en oeuvre en cas de réception, par la borne de répétition (1), d'un signal d'acquittement (6) à destination de la borne source (2) et confirmant que la borne destinataire (3) a bien reçu le premier signal (5), ledit signal d'acquittement (6) étant généré par la borne destinataire (3) ou par une autre borne qui le répète,
ladite étape de mémorisation consistant alors essentiellement à mémoriser que la borne de répétition (1) est capable de communiquer avec la borne destinataire (3).

5. Procédé de contrôle (100) selon l'une quelconque des revendications 3 ou 4, **caractérisé en ce que**
en cas de première réception (101) d'un premier signal (5), provenant d'une borne source (2) et à destination d'une borne destinataire (3), le contenu d'une mémoire est consulté pour conclure quant à la capacité de communiquer entre la borne de répétition (1) et la borne destinataire (3),
la répétition première (102) étant mise en oeuvre dès lors que le contenu de cette mémoire permet de conclure que la borne de répétition (1) et la borne destinataire (3) sont capables de communiquer.

6. Procédé de contrôle (100) selon l'une quelconque des revendications 1 à 5, **caractérisé en ce que**
il comprend une étape, mise en oeuvre par la borne de répétition (1), en cas de réception, après la répétition première (102), d'un signal d'acquittement (6) à destination de la borne source (2) et confirmant que la borne destinataire (3) a bien reçu le premier signal (5), ledit signal d'acquittement (6) étant généré par la borne destinataire (3) ou par une autre borne qui le répète,
ladite étape consistant essentiellement en une répétition d'acquittement (103), au cours de laquelle la borne de répétition (1) répète le signal d'acquittement (6).

7. Procédé de contrôle (100) selon l'une quelconque des revendications 1 à 6, **caractérisé en ce que**
il comprend une étape de signalement d'erreur (104), mise en oeuvre par la borne de répétition (1) après la répétition première (102), et en cas de non réception, préférentiellement avant la fin d'une période de temps prédéfinie à partir de la réception première (101) ou de la répétition première (102), d'un signal d'acquittement (6) à destination de la borne source (2) et confirmant que la borne destinataire (3) a bien reçu le premier signal (5), ledit signal d'acquittement (6) étant généré par la borne destinataire (3) ou par une autre borne qui le répète,
ladite étape consistant essentiellement en la génération, par la borne de répétition (1), d'un signal d'erreur (7) sans fil à destination de la borne source (2) émettrice du premier signal (5) et utile pour identifier un défaut de communication entre la borne source (2) et la borne destinataire (3).

8. Procédé de contrôle (100) selon la revendication 7, **caractérisé en ce que**
il comprend une étape, mise en oeuvre par la borne de répétition (1), en cas de réception par lui d'un signal d'erreur (7) après la répétition première (102),
ladite étape consistant essentiellement en une répétition d'erreur (105), au cours de laquelle ledit signal d'erreur (7) est répété.

9. Procédé de communication (100') dans une installation domotique (4) comprenant un ensemble de bornes qui communiquent sans fil, dont au moins une borne source (2), apte à émettre un signal sans fil, au moins une borne destinataire (3), apte à recevoir un signal sans fil, ainsi qu'au moins une borne de répétition (1) sans fil, ladite borne étant apte à recevoir et envoyer des signaux sans fil, ledit procédé
comprenant une étape d'émission première (106) sans fil, par une ou la borne source (2), d'un premier signal (5), à destination de la ou d'une borne destinataire (3), et comprenant, en outre,
une étape de génération d'un acquittement (107), mise en oeuvre par la borne destinataire (3) consistant essentiellement à générer un signal d'acquittement (6) à destination de la borne source (2) et confirmant que la borne destinataire (3) a bien reçu le premier signal (5),
la ou une borne de répétition (1) mettant en oeuvre le procédé de contrôle (100) selon l'une quelconque des revendications 1 à 8.

10. Procédé de communication selon la revendication 9, **caractérisé en ce que**
il comprend une étape, mise en oeuvre par la borne source (2), en cas de non réception par elle, éventuellement avant la fin d'une période de temps prédéfinie à partir de l'émission première (106), d'un signal d'acquittement (6) à destination de la borne source (2) et confirmant que la borne destinataire (3) a bien reçu le premier signal (5), ledit signal d'acquittement (6) étant généré par la borne destinataire (3) ou par une autre borne qui le répète,
ladite étape consistant essentiellement à rendre compte (108), d'un défaut de communication.

11. Dispositif de communication sans fil pour installation domotique (4), **caractérisé en ce qu'il** est apte à former une borne de répétition (1) pour la mise en oeuvre du procédé de contrôle (100) de l'une quelconque des revendications 1 à 10.

12. Dispositif de communication sans fil pour installation domotique (4), **caractérisé en ce qu'il** est apte à former une borne source (2) pour la mise en oeuvre du procédé de communication (100') selon l'une quelconque des revendications 9 ou 10.
